# EUROPEAN PATENT APPLICATION

(11) **EP 2 871 383 A1**
(43) Date of publication of application: **13.05.2015**
(21) Application number: 12880644.5
(22) Date of filing: 05.07.2012
(51) Int. Cl.: F16D 65/18, F16D 65/14

(54) **DISC BRAKE DEVICE**

(71) Applicant: TBK Co., Ltd., Machida-shi, Tokyo 194-0045 (JP)
(72) Inventor: YASUDA, Yoshihiro, Machida-shi Tokyo 194-0045 (JP)
(74) Representative: Patentwerk B.V.
(86) International application number: PCT/JP2012/004375
(87) International publication number: WO 2014/006658

(57) **Abstract**

A disk brake device (1) has a rotor (4), a carrier (5), a caliper (7), an inner pad (43), and a braking operation mechanism. The braking operation mechanism includes a base plate (35), a wedge plate (37), and a slide member movement mechanism which moves the wedge plate (37) in the direction perpendicular to a braking surface (4a) while moving the wedge plate (37) to slide in the rotating direction of the rotor (4). The carrier (5) includes inner-side rotating-direction movement restricting portions (16) which hold the base plate (35) therebetween. The disk brake device further includes a pressing positioning member (80) inserted into one of gaps between the inner-side rotating-direction movement restricting portions (16) and both ends of the base member (35) so as to be attached to the base member (35). The pressing positioning member (80) presses the base plate (35) in the direction away from the inner-side rotating-direction movement restricting portion (16) to position the base plate (35) relative to the carrier (5) in the rotating direction.

## Description

### TECHNICAL FIELD

The present invention relates to a disk brake device used in a vehicle or the like to generate a braking force using friction.

### TECHNICAL BACKGROUND

A disk brake device is used widely in vehicles or the like and configured to press a friction pad against a rotor which rotates together with a wheel in response to a stepping operation performed on a brake pedal, for example, to generate a frictional force and thus brake the rotation of the rotor. An example of conventionally well known disk brake devices uses a hydraulic force to press a friction pad against a rotor. A disk brake device of this type is configured to actuate a piston using a hydraulic force to move a friction pad which faces a rotor, in the direction perpendicular to the rotor and thus press the friction pad against the rotor. In a hydraulically driven disk brake device, units such as a booster which amplifies an operational force applied to a brake pedal and a master cylinder which converts the operational force amplified by the booster to a hydraulic pressure are needed, which complicates the device configuration.

In view of this, there has recently been developed a disk brake device of a type which drives an electric motor to rotate in response to an operation performed on a brake pedal and presses a friction pad against a rotor using the resulting rotational driving force to generate a braking force (see, e.g., Patent Document 1). Such a configuration as disclosed in Patent Document 1 is advantageous in that, by omitting a booster, a master cylinder, and the like, a simple disk brake device can be configured. The applicant has recently developed a disk brake device which uses an electric motor, in which a friction pad is moved relative to a base plate, which serves as the reference, in the direction perpendicular to a rotor while moving the friction pad to slide in the rotating direction of the rotor when the friction pad is pressed against the rotor to automatically amplify a pressing force with which the friction pad is pressed against the rotor using a wedge effect.

### PRIOR ARTS LIST

### PATENT DOCUMENT

Patent Document 1: Japanese Laid-Open Patent Publication No. 2008-516169 (A) based on PCT International Application No. PCT/JP2012/004374

### SUMMARY OF THE INVENTION

### PROBLEMS TO BE SOLVED BY THE INVENTION

For the disk brake device which uses the wedge effect to precisely control the pressing force of the friction pad, it is particularly important to precisely control slide movement of the friction pad in the rotating direction. Because the friction pad is moved to slide with reference to the base plate, it is necessary to restrict movement of the base plate, which serves as the reference, in the rotating direction. On the other hand, when the friction pad is abraded, it is also necessary to integrally move the friction pad and the base plate closer to the braking surface (for adjustment) in order to keep the gap between the friction pad and the braking surface at a constant distance. Thus, it has been difficult to permit movement of the base plate in the direction which brings the base plate closer to the braking surface while restricting movement of the base plate in the rotating direction.

The present invention has been achieved in view of problems as described above and an object of the present invention is to provide a disk brake device configured to permit movement of a base plate in the direction which brings the base plate closer to a braking surface while restricting movement of the base plate in the rotating direction.

### MEANS TO SOLVE THE PROBLEMS

To attain the object described above, a disk brake device according to the present invention includes: a rotor having a disk-shaped braking surface and coupled to a rotating body to be braked to rotate; a carrier attached to a support member (e.g. axle shaft 2 in an embodiment) which rotatably supports the rotating body and disposed to face the braking surface of the rotor; a caliper attached to the carrier to be movable in a direction perpendicular to the braking surface; a friction pad (e.g. inner pad 43 in the embodiment) disposed to face the braking surface of the rotor; and a braking operation mechanism attached to the caliper to be caused to perform an operation of pressing the friction pad against the braking surface, the braking operation mechanism including a base member (e.g. base plate 35 in the embodiment) held by the caliper, a slide member (e.g. wedge plate 37 in the embodiment) disposed to face the base member and holding the friction pad, and a slide member movement mechanism (e.g. cam member 27, rollers 36, and cam drive unit 100 in the embodiment) provided between the base member and the slide member to move the slide member in the direction perpendicular to the braking surface while moving the slide member to slide relative to the base member in a rotating direction of the rotor in parallel to the braking surface, the slide member and the friction pad held thereby being moved by the slide member movement mechanism in the rotating direction of the rotor and the direction perpendicular to the braking surface so that the friction pad is pressed against the braking surface to brake rotation of the rotor, the carrier including a pair of rotating-direction movement restricting portions (e.g. inner-side rotating-direction movement restricting portions 16 in the embodiment) which hold the base member therebetween at both ends in the rotating direction of the rotor and hold the base member with movement thereof in the rotating direction restricted, the disk brake device further including a pressing member (e.g. pressing positioning member 80 in the embodiment) inserted into one of gaps between the pair of rotating-direction movement restricting portions and both ends of the base member so as to be attached to the base member, and the pressing member being configured to press the base member in a direction away from the rotating-direction movement restricting portion in the one of the gaps, cause an end portion of the base member to abut against the rotating-direction movement restricting portion forming the other of the gaps, and position the base member relative to the carrier in the rotating direction, thereby permitting the base member to move in the direction perpendicular to the braking surface with the base member kept positioned in the rotating direction.

In the disk brake device described above, it is preferable that the pressing member includes an elastically deformable portion (e.g. plate-shaped main body portion 81 in the embodiment) formed to be elastically deformable; and the elastically deformable portion is elastically deformed when inserted into one of the gaps, thereby pressing the base member in the direction away from the rotating-direction movement restricting portion.

In addition, it is preferable that the pressing member includes an engagement portion which is engaged with the base member when inserted into one of the gaps.

### ADVANTAGEOUS EFFECTS OF THE INVENTION

The disk brake device according to the present invention includes a pressing member inserted into one of gaps between the pair of rotating-direction movement restricting portions and both ends of the base member so as to be attached to the base member. Therefore, the pressing member can press the base member in the rotating direction to cause the base member to abut against the rotating-direction movement restricting portion. Thus, it is possible to achieve a configuration which permits movement of the base member in the direction which brings the base member closer to the braking surface while restricting movement of the base member in the rotating direction.

In the disk brake device described above, it is preferable that the pressing member includes an elastically deformable portion formed to be elastically deformable. When the elastically deformable portion is inserted into the gap between the rotating-direction movement restricting portion and the base member, the base member can be caused by the spring force of the elastically deformable portion to elastically abut against the rotating-direction movement restricting portion. Therefore, even if an external force is applied to the base member, it is possible to receive and absorb such an external force and maintain a state in which the base member abuts against the rotating-direction movement restricting portion.

In addition, it is preferable that the pressing member includes an engagement portion which is engaged with the base member. With such a configuration, the pressing member can be inserted into the gap between the rotating-direction movement restricting portion and the base member to integrally attach the pressing member to the base member. Therefore, it is possible to prevent the pressing member from slipping off from the gap between the rotating-direction movement restricting portion and the base member.

### BRIEF DESCRIPTION OF THE DRAWINGS

FIG. 1 is a perspective view showing a disk brake device according to an embodiment of the present invention;
FIG. 2 is a cross-sectional view of a II-II portion in FIG. 1;
FIG. 3 shows a carrier, in which FIG. 3A is a front view, FIG. 3B is a plan view, and FIG. 3C is a cross-sectional view of a III(c)-III(c) portion in FIG. 3A;
FIG. 4 is a perspective view showing the vicinity of a wedge plate (in which a cage and a holding unit are omitted);
FIG. 5 is a perspective view showing the vicinity of the wedge plate (including the cage and the holding unit);
FIG. 6 is a perspective view showing a braking unit (including a pad and a shoe plate);
FIG. 7 is a plan view showing the braking unit (including the pad and the shoe plate);
FIG. 8 shows a wedge plate, in which FIG. 8A is a back view, FIG. 8B is a plan view, and FIG. 8C is a front view (with the shoe plate additionally indicated by the two-dot-dash lines);
FIG. 9 shows an inner pad and the shoe plate, in which FIG. 9A is a plan view and FIG. 9B is a front view;
FIG. 10A is a front view of a coupling clip, FIG. 10B is a side view of the coupling clip, FIG. 10C is a front view of an engagement pin, and FIG. 10D is a side view of the engagement pin;
FIGS. 11A to 11C are cross-sectional views showing a process in which the inner pad is mounted to the wedge plate, in which FIG. 11A shows a state in which coupling grooves are fitted with coupling projections, FIG. 11B shows a state in which the coupling clips are mounted, and FIG. 11C shows a state in which the inner pad is mounted to the wedge plate;
FIG. 12 shows a pressing positioning member, in which FIG. 12A is a front view, FIG. 12B is a side view, and FIG. 12C is a bottom view;
FIG. 13 is a cross-sectional view of a XIII-XIII portion in FIG. 1;
FIG. 14 is a cross-sectional view of a XIV-XIV portion in FIG. 1;
FIG. 15 shows a driving force transmission shaft, in which FIG. 15A is a plan view, FIG. 15B is a cross-sectional view of a XV(b)-XV(b) portion in FIG. 15A, and FIG. 15C is a bottom view;
FIG. 16 shows an input-side spur gear, in which FIG. 16A is a front view and FIG. 16B is a cross-sectional view of a XVI(b)-XVI(b) portion in FIG. 16A;
FIG. 17 shows a cam drive shaft, in which FIG. 17A is a plan view, FIG. 17B is a side view, and FIG. 17C is a bottom view;
FIG. 18 shows a control configuration of the disk brake device according to the embodiment of the present invention;
FIG. 19 illustrates the operation of the wedge plate; and
FIG. 20 is a flow chart showing control for the disk brake device according to the embodiment of the present invention.

### DESCRIPTION OF THE EMBODIMENTS

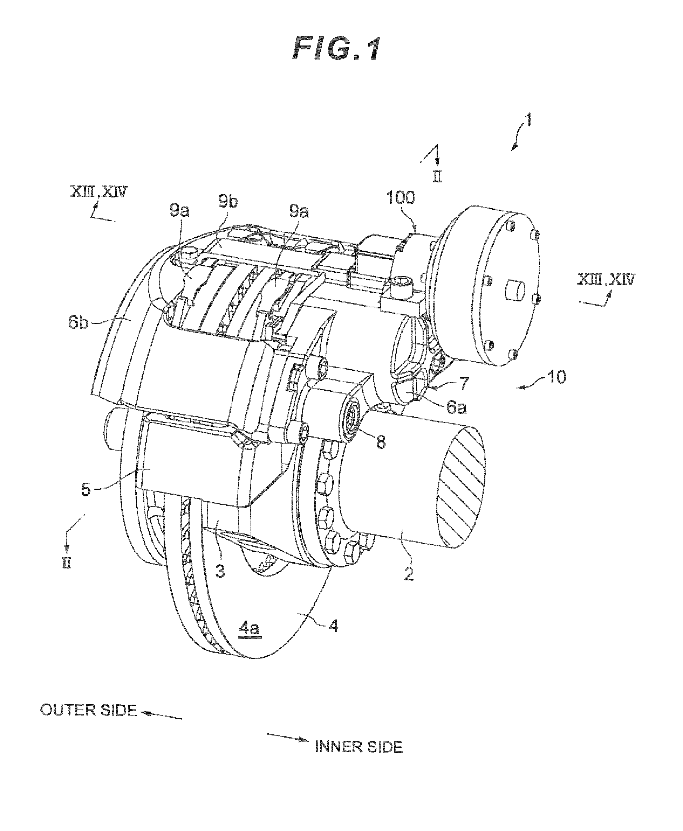

Referring to the drawings, a description will be given below of an embodiment of the present invention. FIG. 1 shows a state in which a disk brake device 1 as an example to which the present invention is applied is mounted on a vehicle. First, a description will be given of an overall configuration of the disk brake device 1 with reference to FIGS. 1 to 18. Note that, in the description given below, the outer side of the vehicle in the lateral direction is referred to as an outer side and the inner side of the vehicle in the lateral direction is referred to as an inner side for convenience sake. In addition, the front side of the vehicle is referred to as a forward side, and the rear side of the vehicle is referred to as a rearward side.

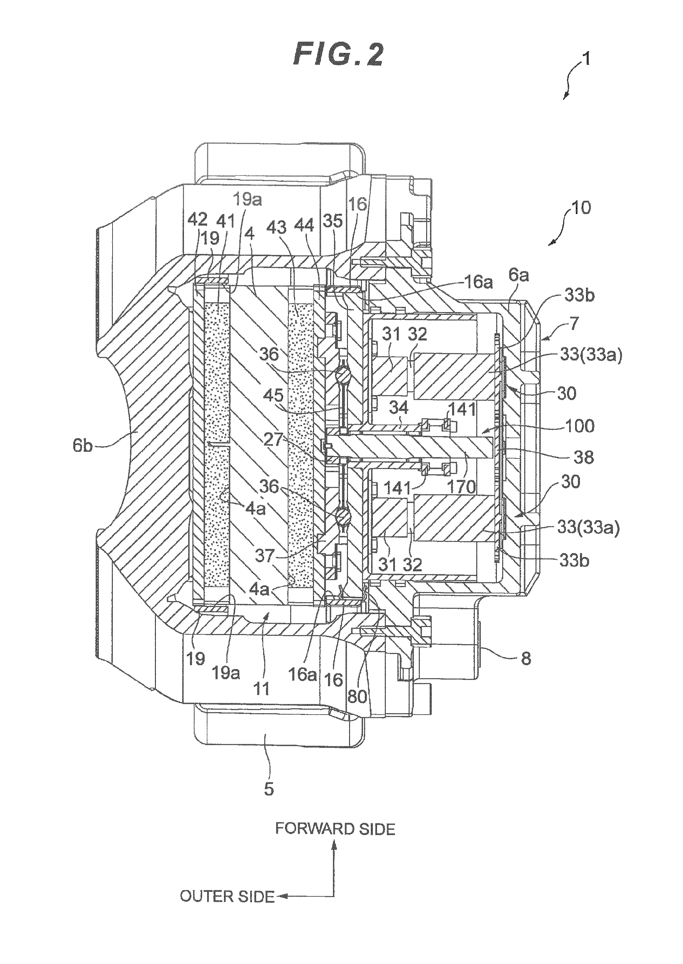

As shown in FIGS. 1 and 2, the disk brake device 1 includes a rotor 4 having braking surfaces 4a and formed in a disk shape, a carrier 5 disposed to hold the braking surfaces 4a of the rotor 4 therebetween, and a caliper assembly 10 attached to the carrier 5. The rotor 4 is coupled to a wheel (not illustrated) to be braked, and rotatably supported by an axle shaft 2. A support plate 3 is secured to the axle shaft 2. The carrier 5 is secured to the support plate 3.

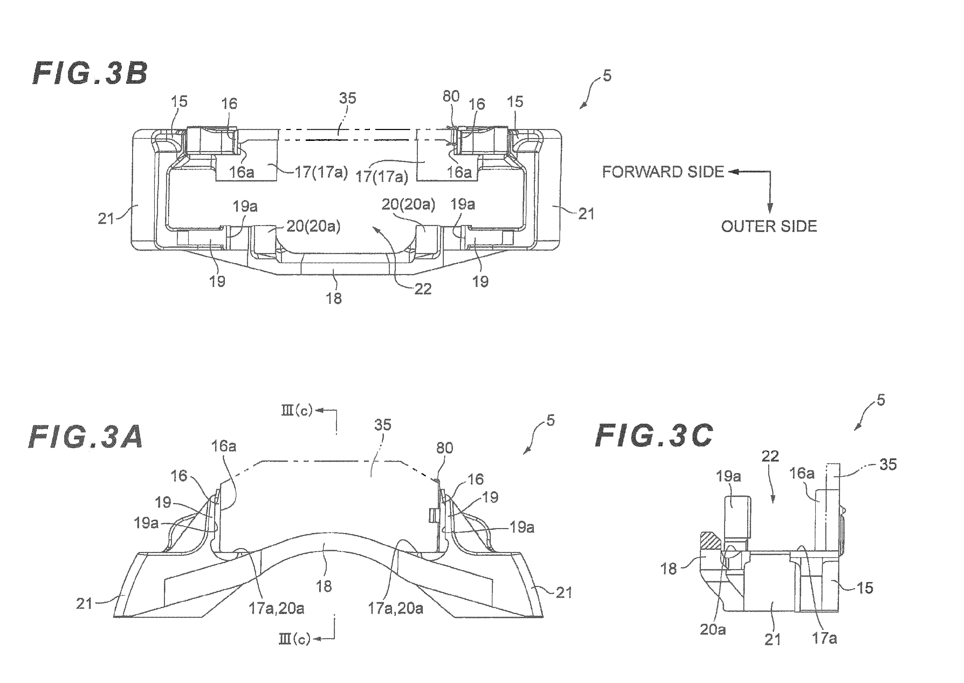

As shown in FIG. 3, the carrier 5 includes a pair of inner-side frame portions 15 positioned on the inner side, an outer-side frame portion 18 positioned on the outer side, and a pair of coupling frame portions 21 which link together the frame portions 15 and 18. A rotor housing space 22 which penetrates vertically is provided in the middle portion of the carrier 5. Each of the inner-side frame portions 15 includes an inner-side rotating-direction movement restricting portion 16 provided to extend upward and an inner-side radial-direction movement restricting portion 17 in a flat plate shape linked to the lower end portion of the inner-side rotating-direction movement restricting portion 16. Flat inner-side rotating-direction movement restricting surfaces 16a which face each other are formed on the inner-side rotating-direction movement restricting portions 16. Flat inner-side radial-direction movement restricting surfaces 17a are formed on the inner-side radial-direction movement restricting portions 17. The outer-side frame portion 18 includes a pair of outer-side rotating-direction movement restricting portions 19 provided to extend upward and outer-side radial-direction movement restricting portions 20 in a flat plate shape linked to the lower end portions of the outer-side rotating-direction movement restricting portions 19. Flat outer-side rotating-direction movement restricting surfaces 19a which face each other are formed on the outer-side rotating-direction movement restricting portions 19. Flat outer-side radial-direction movement restricting surfaces 20a are formed on the outer-side radial-direction movement restricting portions 20.

As shown in FIGS. 1 and 2, the caliper assembly 10 includes a caliper 7 formed by coupling an inner housing 6a and an outer housing 6b to each other, a braking unit 11 disposed in the caliper 7, an outer pad 41 and an inner pad 43 disposed in the caliper 7 to face the braking surfaces 4a of the rotor 4, a pair of adjustment units 30 disposed in the caliper 7, and a cam drive unit 100 disposed inside and outside the caliper 7.

The caliper 7 is attached to the carrier 5 using a slide pin 8, and movable to slide in the axial direction of the rotor 4. Therefore, the caliper assembly 10 (the caliper 7, and the braking unit 11, the adjustment units 30, and the cam drive unit 100 disposed inside and outside the caliper 7) is integrally movable to slide in the axial direction of the rotor 4.

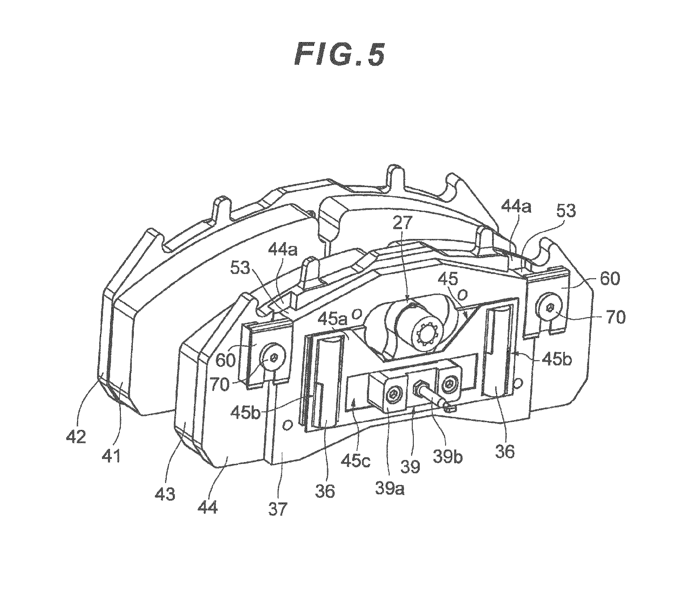

As shown in FIG. 2, the braking unit 11 includes a cam member 27, a base plate 35, a wedge plate 37 disposed to face the base plate 35, rollers 36 formed in a cylindrical shape, a cage 45 which holds the rollers 36, and a holding unit 39 (see FIGS. 5 to 7) which elastically draws the wedge plate 37 toward the inner side to hold the rollers 36 between the plates 35 and 37.

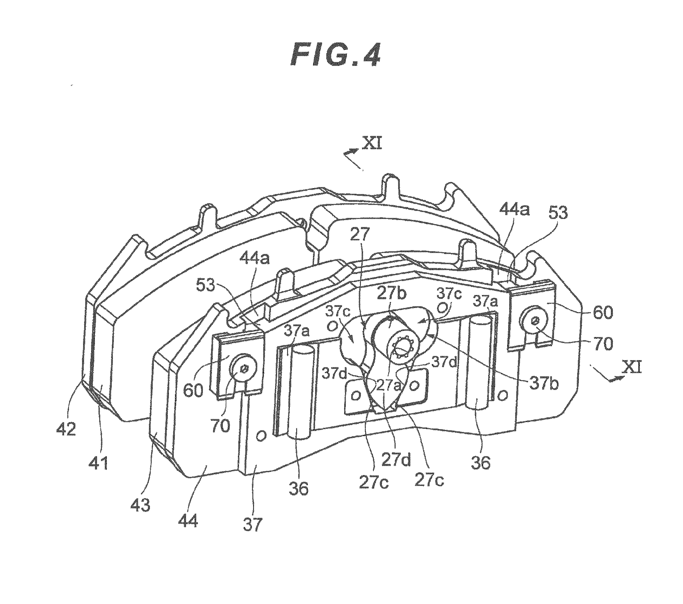

As shown in FIG. 4, the cam member 27 includes a main body portion 27b in which an involute spline shaft receiving portion 27a is formed, and an engaging tooth 27d on which cam-side abutment surfaces 27c formed in an involute shape are formed.

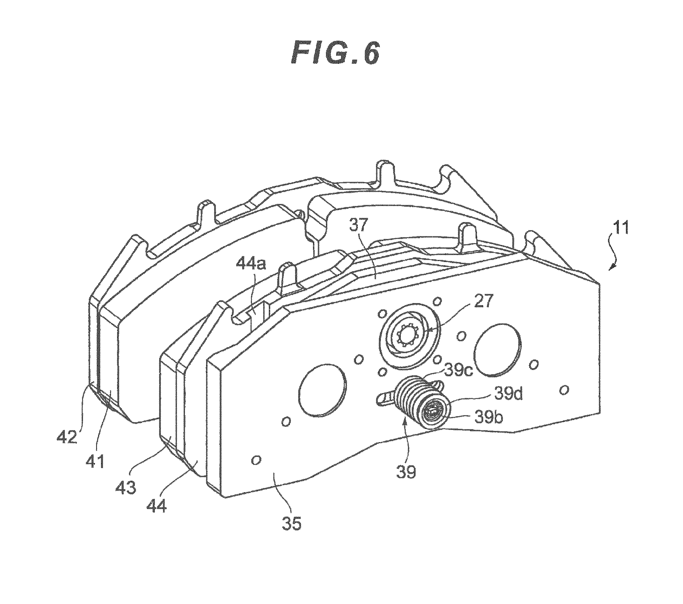

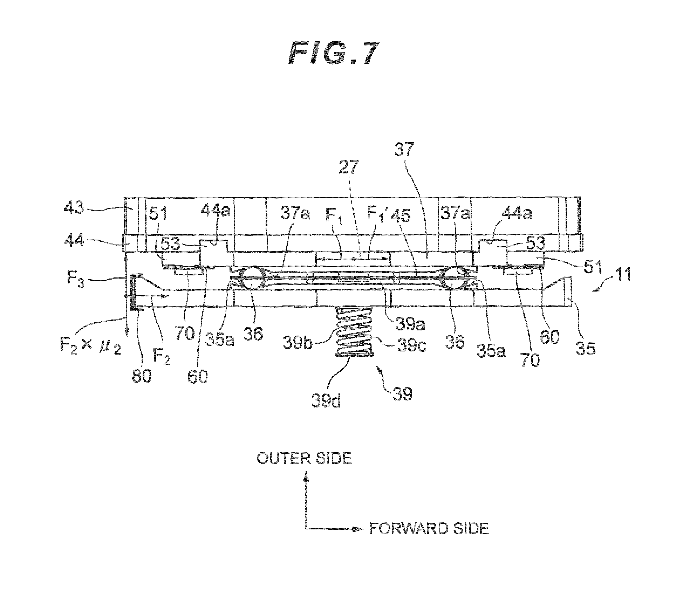

As shown in FIGS. 6 and 7, the base plate 35 is formed in a generally flat plate shape. In the surface of the base plate 35 facing the wedge plate 37, wedge grooves 35a each having a V-shaped cross-sectional shape for holding the rollers 36 fitted therein are formed.

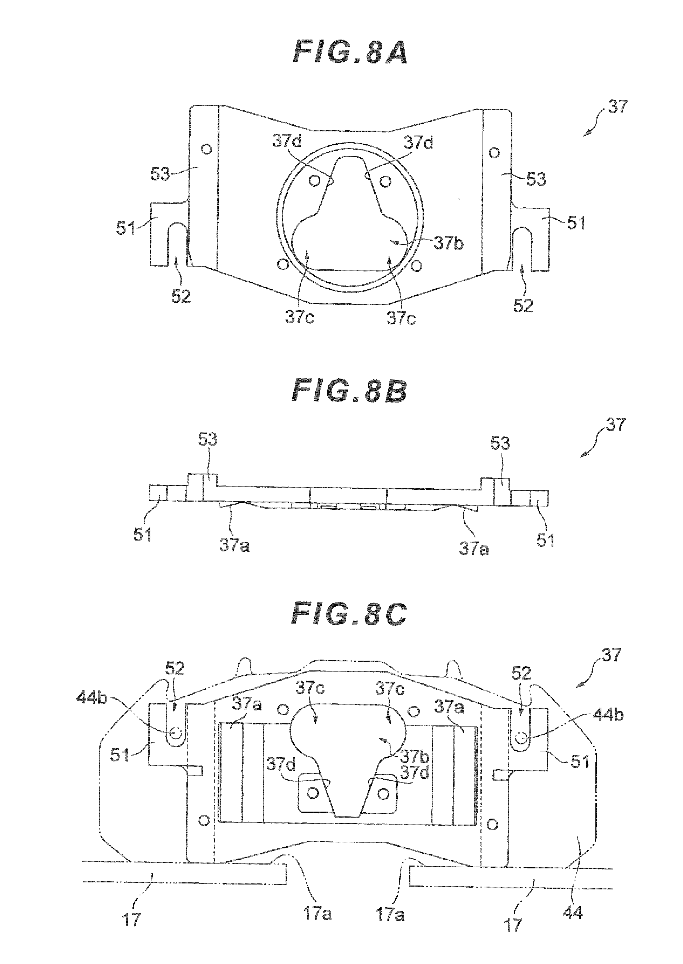

As shown in FIGS. 4 and 7, the wedge plate 37 is formed in a generally flat plate shape. In the surface of the wedge plate 37 facing the base plate 35, wedge grooves 37a each having a V-shaped cross-sectional shape for holding the rollers 36 fitted therein are formed. As shown in FIG. 4, an insertion space 37b which penetrates in the axial direction of the rotor 4 is formed in the middle portion of the wedge plate 37. The cam member 27 is disposed in the insertion space 37b. Recess portions 37c are formed in the upper part of the insertion space 37b to prevent interference between the main body portion 27b of the cam member 27 and the wedge plate 37 when the wedge plate 37 is moved to slide in the rotating direction relative to the base plate 35. Rack-side abutment surfaces 37d which abut against the cam-side abutment surfaces 27c of the cam member 27 are formed in the lower part of the insertion space 37b. As shown in FIG. 8, the wedge plate 37 includes a pair of coupling projections 53 which have a generally rectangular cross-sectional shape and project toward the outer side, and a pair of plate holding portions 51 in which pin receiving grooves 52 extending vertically are formed.

As shown in FIG. 5, the cage 45 includes a base portion 45a formed in a generally flat plate shape, a pair of roller holding portions 45b for accommodating and holding the rollers 36, and a guiding opening 45c formed in the middle portion of the cage 45.

As shown in FIGS. 5 to 7, the holding unit 39 includes a base member 39a attached to the wedge plate 37, a support member 39b attached to the base member 39a, a compression spring 39c, and a spring retainer 39d. The base member 39a is fitted in the guiding opening 45c of the cage 45, and movable to slide in the front-rear direction of the vehicle as guided by the guiding opening 45c. The assembly configuration of the holding unit 39 is described. As shown in FIG. 6, first, the base plate 35 is disposed on the inner side of the base member 39a, and the support member 39b is inserted through the compression spring 39c. Next, the spring retainer 39d is attached to the distal end portion of the support member 39b, whereby the compression spring 39c is held in a compressed state and the holding unit 39 is assembled. Consequently, the rollers 36 are elastically held between the wedge plate 37 (wedge grooves 37a) and the base plate 35 (wedge grooves 35a) with a force toward the inner side applied to the wedge plate 37 at all times.

As shown in FIG. 2, the outer pad 41 (referred to also as a friction member) includes a shoe plate 42 provided on the outer side thereof. The outer pad 41 is disposed to face one of the pair of braking surfaces 4a which is on the outer side. The inner pad 43 includes a shoe plate 44 provided on the inner side thereof. The inner pad 43 is disposed to face one of the pair of braking surfaces 4a which is on the inner side. Note that an assembly of a pad and a shoe plate attached thereto is occasionally referred to simply as a pad (friction pad).

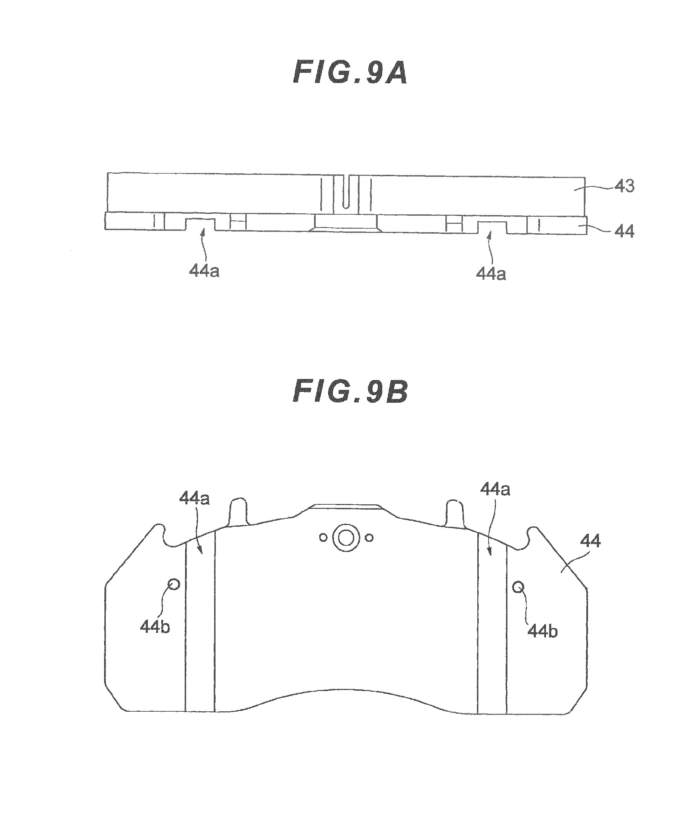

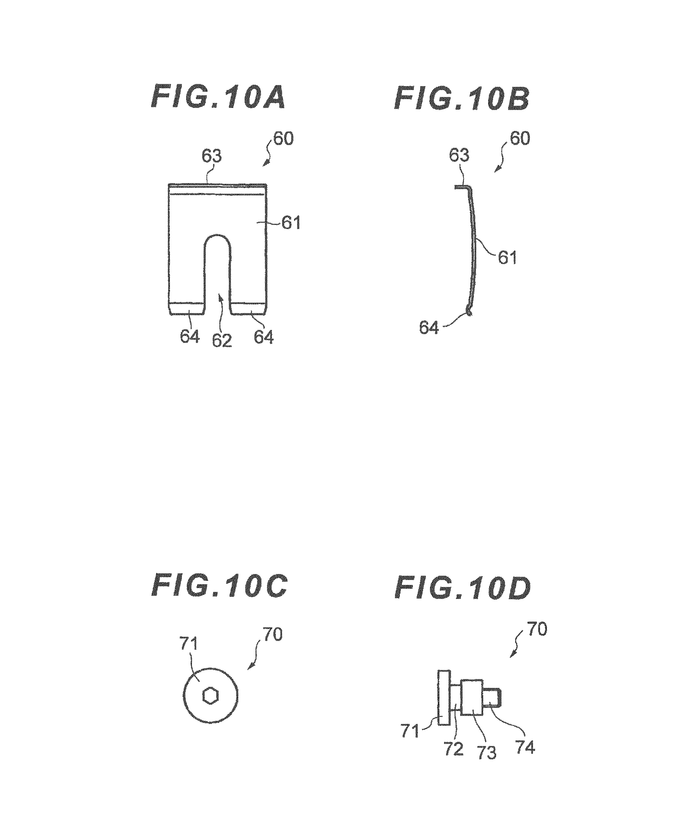

As shown in FIG. 9, a pair of coupling grooves 44a which have a generally rectangular cross-sectional shape and extend vertically and which can be fitted with the coupling projections 53 of the wedge plate 37 are formed in the inner side of the shoe plate 44. Pin attachment holes 44b are formed in portions of the shoe plate 44 which are adjacent to the coupling grooves 44a. Coupling pins 70 shown in FIG. 4 are attached to the pin attachment holes 44b. As shown in FIGS. 10C and 10D, the coupling pins 70 each include a spring load receiving portion 71 in a disk shape, a coupling shaft portion 72 linked to the spring load receiving portion 71, an insertion shaft portion 73 linked to the coupling shaft portion 72 and being larger in diameter than the coupling shaft portion 72, and a threaded portion 74. The coupling pins 70 are attached to the shoe plate 44 with the threaded portions 74 fastened to the pin attachment holes 44b of the shoe plate 44.

Coupling clips 60 shown in FIG. 4 are used to mount the inner pad 43 to the wedge plate 37. As shown in FIGS. 10A and 10B, the coupling clips 60 are formed using a flat plate metal material which is elastically deformable, and each include a base portion 61 having a slit portion 62 and formed to be curved, an upper retaining portion 63 formed by bending the upper end portion of the base portion 61, and lower retaining portions 64 formed by bending the lower end portions of the base portion 61.

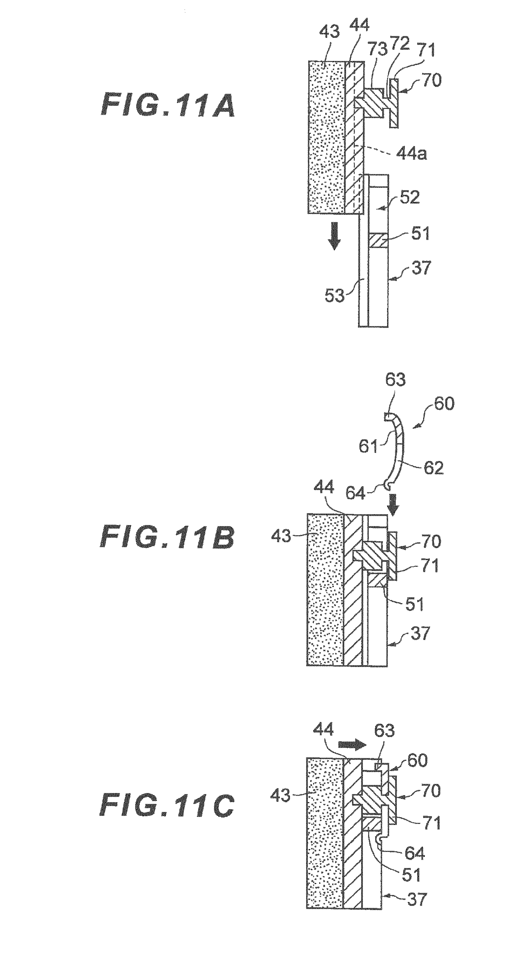

The procedure for mounting the inner pad 43 to the wedge plate 37 using the coupling clips 60 is described. As shown in FIG. 11A, first, the coupling grooves 44a of the shoe plate 44 are fitted with the coupling projections 53 of the wedge plate 37, and the inner pad 43 is moved to slide downward so that the coupling pins 70 of the shoe plate 44 are received in the pin receiving grooves 52 of the wedge plate 37 (see FIG. 11B). Next, as shown in FIG. 11B, the coupling clips 60 are inserted from above into gaps between the spring load receiving portions 71 and the plate holding portions 51 to be attached. Then, the lower retaining portions 64 are retained at the lower end portions of the plate holding portions 51, and the upper retaining portions 63 are retained at the upper end portions of the plate holding portions 51. If the inner pad 43 is mounted to the wedge plate 37 using the coupling clips 60, the inner pad 43 can be elastically pressed against the wedge plate 37 to be mounted thereto by the spring forces of the base portions 61. Therefore, the inner pad 43 can be moved together with the wedge plate 37, which enables precisely controlling movement of the inner pad 43 in the rotating direction and the radial direction. In addition, generation of drag torque or the like due to the inner pad 43 can also be inhibited.

After the inner pad 43 is mounted to the wedge plate 37, as shown in FIG. 1, leaf springs 9a which are vertically elastically deformable are attached to the upper part of the shoe plate 44, and a retainer plate 9b is attached so as to press the leaf springs 9a from the upper side. The inner pad 43 is thus elastically held by the spring forces of the leaf springs 9a so as not to slip out of the outer housing 6b.

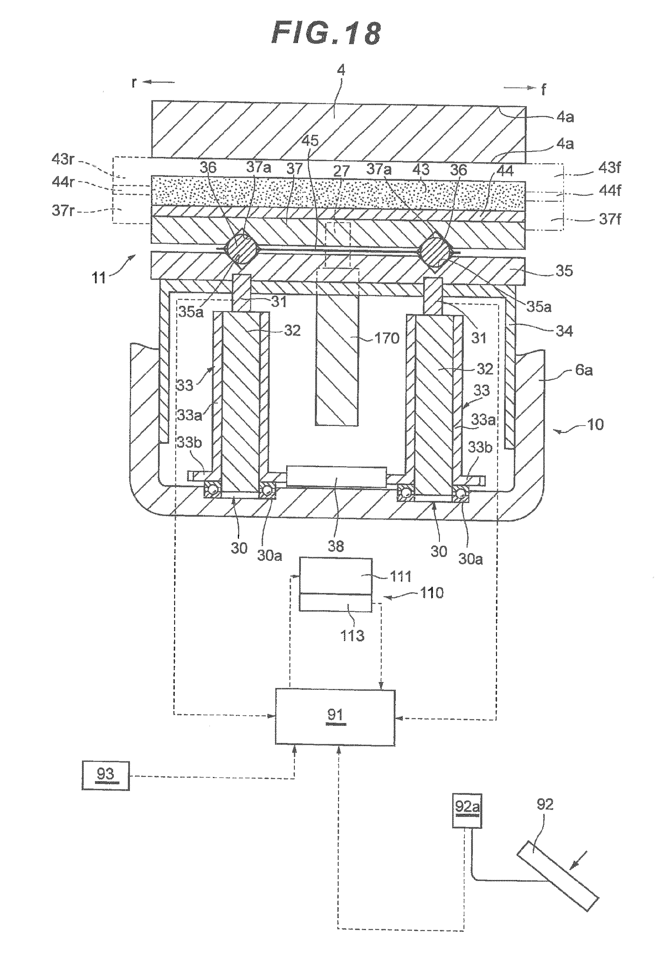

As shown in FIG. 2, the adjustment units 30 each include a pressing force sensor 31, an adjustor main body portion 32, an adjustor tubular body 33, and an adjusting drive gear 38. The pressing force sensor 31 is a sensor which detects a pressing force applied when the inner pad 43 is pressed against the braking surface 4a. The adjustor main body portion 32 is formed in a cylindrical shape, and includes a helical main body-side screw (not shown) formed on the outer circumferential surface thereof. The adjustor tubular body 33 includes a tubular portion 33a formed in a generally tubular shape and having a helical tube-side screw (not shown) formed in the inner circumferential surface thereof and engaged with the main body-side screw, and an adjusting follower gear 33b formed at the inner-side end portion of the tubular portion 33a. The adjustor tubular body 33 is supported by a bearing 30a (see FIG. 18) provided between the inner housing 6a and the adjustor tubular body 33 to be rotatable relative to the inner housing 6a. The adjusting drive gear 38 is rotatably supported by the inner housing 6a, and engaged with the adjusting follower gear 33b of each of the pair of adjustment units 30. By the adjustment units 30, a gap adjustment in which the gap between the braking surface 4a of the rotor 4 and the inner pad 43 is adjusted to have a predetermined distance is performed every time a braking operation is performed.

The adjustment units 30 are disposed between an adjustment case 34 and the inner housing 6a. The adjustment units 30 can perform the gap adjustment by rotating the adjustor tubular body 33 through the adjusting drive gear 38 and pushing out the adjustor main body portion 32 toward the outer side to move the inner pad 43 closer to the braking surface 4a of the rotor 4 via the braking unit 11.

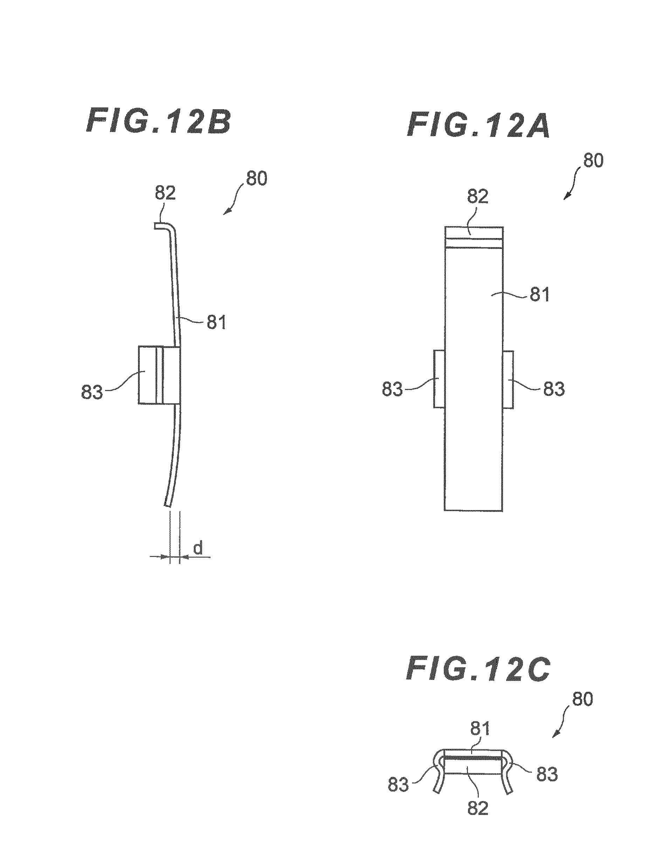

The braking unit 11 is provided on the outer side of the adjustment case 34. The base plate 35 is placed on the inner-side radial-direction movement restricting portions 17 of the carrier 5, and held between the inner-side rotating-direction movement restricting portions 16 of the carrier 5. As shown in FIGS. 2 and 3, a pressing positioning member 80 which positions the base plate 35 by restricting movement of the base plate 35 in the rotating direction is mounted to the base plate 35. As shown in FIG. 12, the pressing positioning member 80 is formed using a flat plate metal material which is elastically deformable, and includes a plate-shaped main body portion 81 formed as deformed by a deflection amount d, an upper retaining portion 82 formed by bending the upper end portion of the plate-shaped main body portion 81, and engagement portions 83 formed by bending the middle portions of the plate-shaped main body portion 81 in the vertical direction.

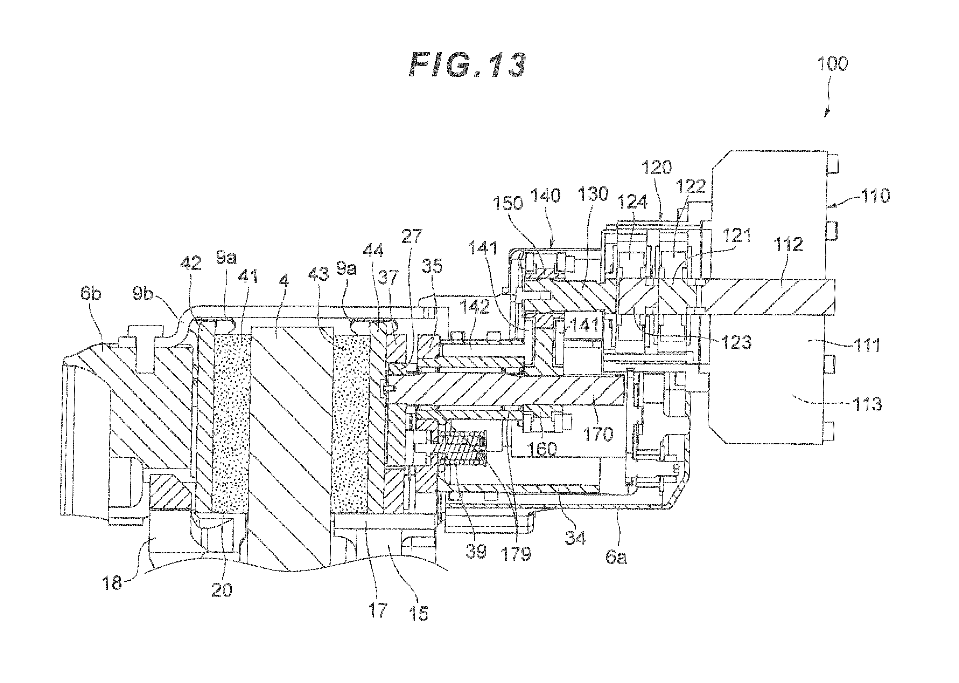

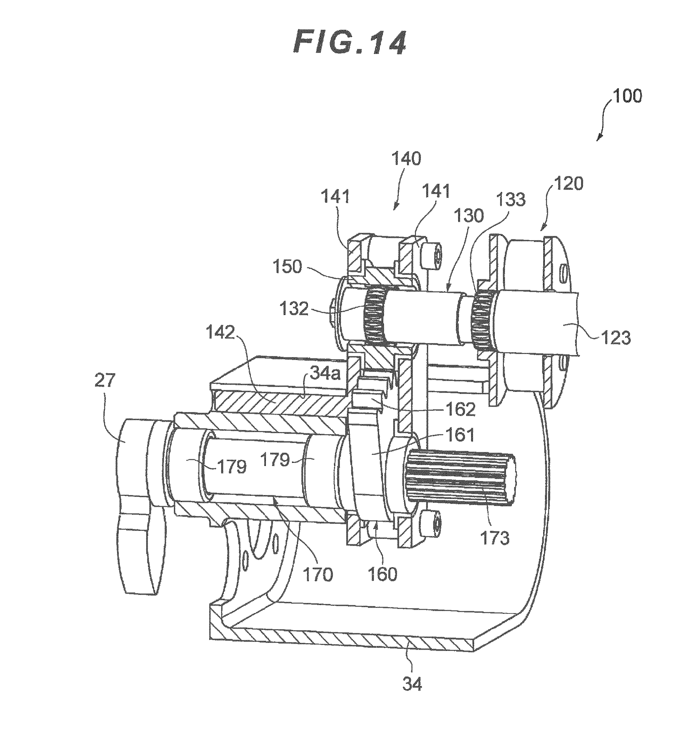

As shown in FIGS. 13 and 14, the cam drive unit 100 includes an electric motor 110 which receives supply of electric power to be driven to rotate, a speed reducer 120 to which the rotational driving force of the electric motor 110 is input, a driving force transmission shaft 130 connected to an output shaft of the speed reducer 120, a gear unit 140 connected to the driving force transmission shaft 130, and a cam drive shaft 170 connected to the output side of the gear unit 140.

The electric motor 110 includes a motor main body portion 111 which receives supply of electric power to generate a rotational driving force, and a motor output shaft 112 which outputs the rotational driving force generated by the motor main body portion 111. A rotation angle sensor 113 (e.g. an encoder) which detects the rotation angle of the electric motor 110 is built in the electric motor 110. In the embodiment, the electric motor 110 is attached to the outside of the inner housing 6a, which ensures the degree of freedom of the arrangement of the electric motor 110 and also supports an increase in size of the electric motor 110.

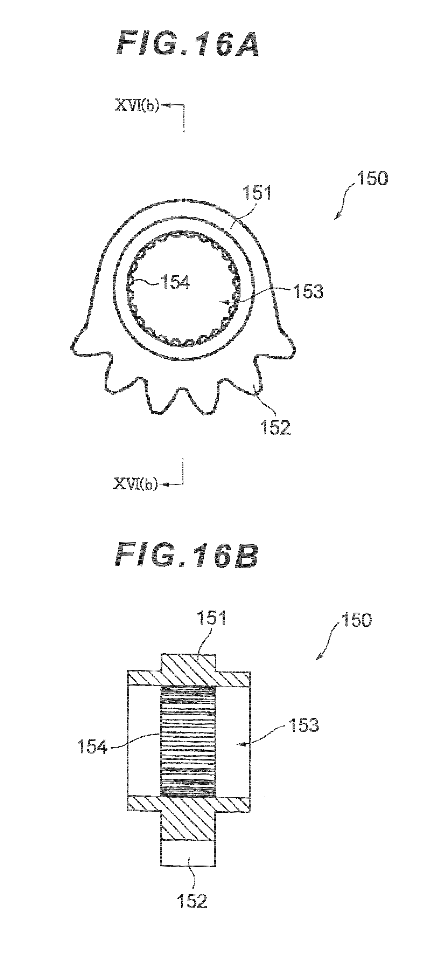

The speed reducer 120 includes a first input shaft 121 connected to the motor output shaft 112, a first planetary gear unit 122 which includes a sun gear, planetary gears, a ring gear, and so forth (not shown), a second input shaft 123 to which the rotational driving force which has been reduced in speed by the first planetary gear unit 122 is input, and a second planetary gear unit 124 which includes a sun gear, planetary gears, a ring gear, and so forth (not shown). In the speed reducer 120, the rotational driving force of the motor output shaft 112 is first reduced in speed by the first planetary gear unit 122, and further reduced in speed by the second planetary gear unit 124 to be output. An involute serrated shaft receiving portion 154 such as that shown in FIG. 16A is formed on the output shaft (ring gear) of the second planetary gear unit 124. In the embodiment, the speed reducer 120 includes two sets of planetary gear units 122 and 124. However, a speed reducer with another configuration (such as a speed reducer which includes a single set of planetary gear unit) may also be used.

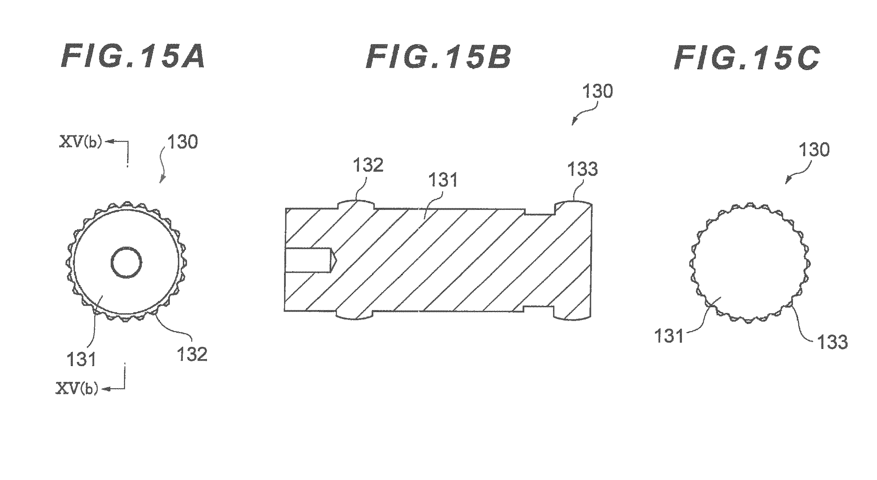

As shown in FIG. 15, the driving force transmission shaft 130 includes a cylindrical shaft main body portion 131, an output-side involute serrated shaft portion 132 formed on the shaft main body portion 131 and having an arcuate cross section (see FIG. 15B), and an input-side involute serrated shaft portion 133 having an arcuate cross section (see FIG. 15B). The input-side involute serrated shaft portion 133 is engaged with an involute serrated shaft receiving portion formed on the output shaft of the second planetary gear unit 124.

The gear unit 140 includes an input-side spur gear 150, an output-side spur gear 160 engaged with the input-side spur gear 150, and a gear holding frame 141 which rotatably holds the spur gears 150 and 160.

As shown in FIG. 16, the input-side spur gear 150 includes a ring-shaped gear main body portion 151, a plurality of engaging teeth 152 formed on the circumferential edge portion of the gear main body portion 151, a shaft insertion portion 153 formed to penetrate the gear main body portion 151, and an involute serrated shaft receiving portion 154 formed on the inner circumferential surface of the shaft insertion portion 153. As shown in FIG. 14, the output-side spur gear 160 includes a ring-shaped gear main body portion 161, a plurality of engaging teeth 162 formed on the circumferential edge portion of the gear main body portion 161 and engaged with the engaging teeth 152, a shaft insertion portion (not shown) formed to penetrate the gear main body portion 161, and an involute spline shaft receiving portion (not shown) formed on the inner circumferential surface of the shaft insertion portion.

The gear holding frame 141 rotatably holds the input-side spur gear 150 and the output-side spur gear 160 as engaged therewith. The gear holding frame 141 includes an attachment projection 142 which projects toward the outer side. As shown in FIG. 14, an attachment hole 34a is formed in the adjustment case 34. The gear unit 140 is attached to the adjustment case 34 to be movable to slide in the axial direction of the rotor 4 with the attachment projection 142 inserted into the attachment hole 34a.

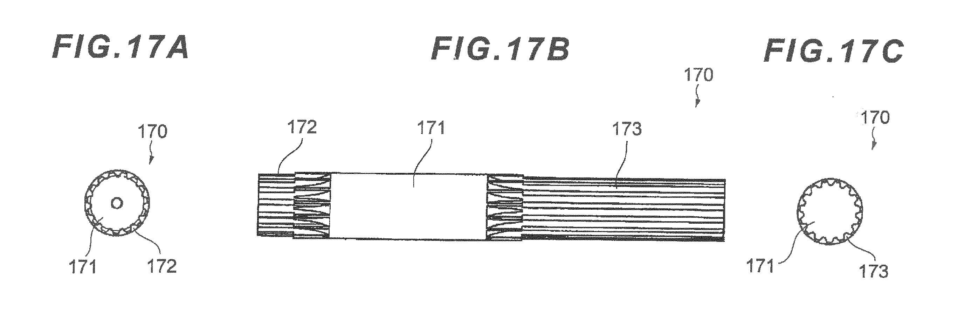

As shown in FIG. 17, the cam drive shaft 170 includes a cylindrical shaft main body portion 171, an output-side involute spline shaft portion 172 formed on the shaft main body portion 171, and an input-side involute spline shaft portion 173. The input-side involute spline shaft portion 173 is engaged with the involute spline shaft receiving portion of the output-side spur gear 160. The output-side involute spline shaft portion 172 is engaged with the involute spline shaft receiving portion 27a of the cam member 27. As shown in FIGS. 13 and 14, the cam drive shaft 170 is rotatably supported by the adjustment case 34 via bearings 179.

As shown in FIG. 18, a brake pedal 92 on which a driver performs a brake operation is provided in the vehicle mounted with the disk brake device 1 to which the present invention is applied. The stepping force (brake operation force) of the brake pedal 92 is converted into an electric signal and detected by a stepping force sensor 92a. The vehicle is also provided with a rotating direction sensor 93 which detects the rotating direction (forward side f or rearward side r) of the rotor 4. To a controller 91 which controls the operation of the electric motor 110, the results of detection performed by the pressing force sensor 31, the stepping force sensor 92a, the rotating direction sensor 93, and the rotation angle sensor 113 are input. In the controller 91, the braking operation force detected by the stepping force sensor 92a and the pressing force of the inner pad 43 corresponding to the braking operation force are preliminarily associated with each other and stored.

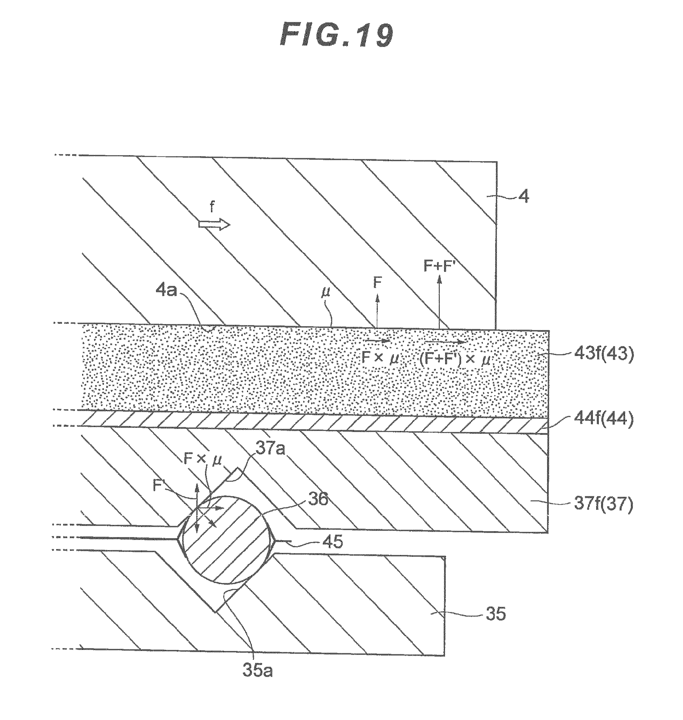

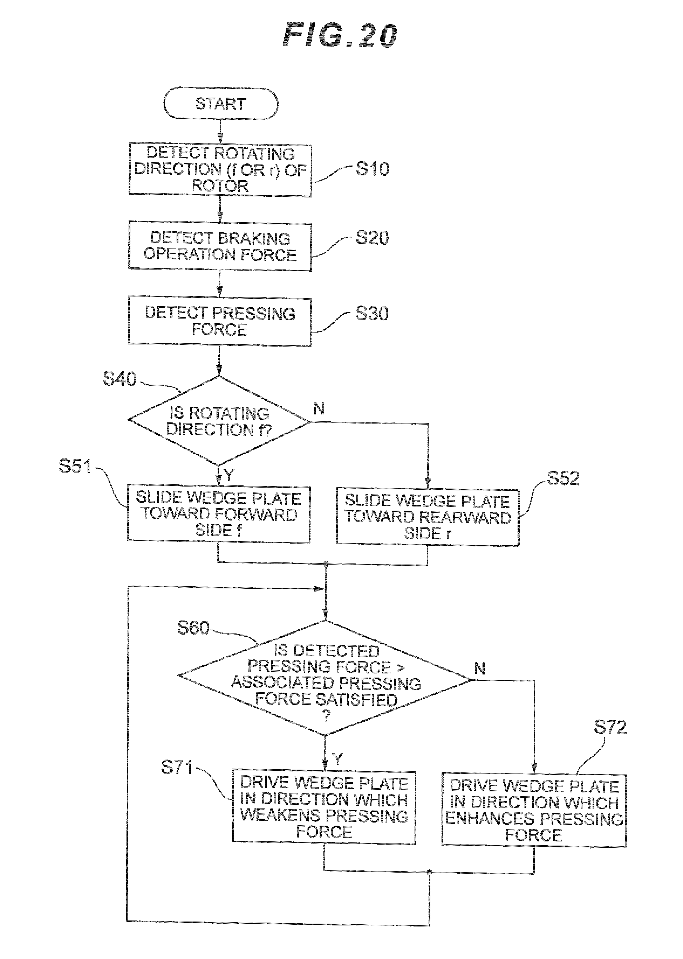

Thus far, the description has been given of the overall configuration of the disk brake device 1. In the following, referring to FIGS. 18 and 19, a description will be given of the operation of the disk brake device 1 along the flow chart shown in FIG. 20. Note that, in the following, by way of example, the description will be given of the operation when the stepping operation is performed by the driver on the brake pedal 92 to cause the vehicle to forwardly run.

First, in Step S10 shown in FIG. 20, the rotating direction (forward side f or rearward side r) of the rotor 4 detected by the rotating direction sensor 93 is input to the controller 91. Next, the flow advances to Step S20 where a signal indicating the braking operation force applied to the brake pedal 92 detected by the stepping force sensor 92a is input to the controller 91. Subsequently, the flow advances to Step S30 where a signal indicating the pressing force of the inner pad 43 detected by the pressing force sensor 31 is input to the controller 91.

In subsequent Step S40, the controller 91 determines whether or not the rotating direction of the rotor 4 input in Step S10 is the forward side f. When the rotating direction of the rotor 4 is the forward side f, the controller 91 outputs a drive signal to the electric motor 110 so as to move the wedge plate 37 to slide toward the forward side f (Step S51). When the electric motor 110 is driven to rotate on the basis of the input drive signal, the rotational driving force of the electric motor 110 is reduced in speed by the speed reducer 120, and thereafter transmitted to the gear unit 140 via the driving force transmission shaft 130. The rotational driving force transmitted to the gear unit 140 is transmitted from the input-side spur gear 150 to the output-side spur gear 160, and further from the output-side spur gear 160 to the cam drive shaft member 170, which drives the cam member 27 to rotate in response to the rotational driving of the electric motor 110. When the cam member 27 is driven to rotate, the cam-side abutment surfaces 27c of the cam member 27 press the rack-side abutment surfaces 37d of the wedge plate 37 to move the wedge plate 37 to slide in the rotating direction (which is the forward side f in this case) of the cam member 27.

By thus using the configuration which causes the cam-side abutment surfaces 27c each formed in the involute shape to abut on the rack-side abutment surfaces 37d and move the wedge plate 37 to slide, it is possible to inhibit slip occurring between the cam-side abutment surfaces 27c and the rack-side abutment surfaces 37d and efficiently convert the rotational driving force of the cam member 27 to the slide movement of the wedge plate 37.

In FIG. 18, the members which have been moved to slide toward the forward side f are indicated as the wedge plate 37f, the shoe plate 44f, and the inner pad 43f.

FIG. 19 shows an enlarged view of the wedge plate 37f, the shoe plate 44f, and the inner pad 43f which have been moved to slide toward the forward side f. As can be seen from FIG. 19, when the wedge plate 37 is moved to slide toward the forward side f, each of the rollers 36 is pressed against the inclined surface of the V-shaped wedge groove 37a corresponding to the rearward side. Therefore, the wedge plate 37 (the shoe plate 44 and the inner pad 43 each integrated with the wedge plate 37) is pushed out toward the outer side while moving to slide toward the forward side f in such a manner as to follow the inclination of the inclined surface.

On the other hand, when the rotating direction of the rotor 4 is determined as the rearward side r in Step S40, a drive signal is output from the controller 91 to the electric motor 110 so as to move the wedge plate 37 to slide toward the rearward side r (Step S52). In FIG. 18, the members which have been moved to slide toward the rearward side r are indicated as the wedge plate 37r, the shoe plate 44r, and the inner pad 43r.

The wedge plate 37 is pushed out toward the outer side while moving to slide toward the forward side f or the rearward side r in accordance with the rotation angle of the cam member 27, as a result of which the inner pad 43 is pressed against the braking surface 4a. As a result, a counterforce exerted from the braking surface 4a acts on the caliper 7 (inner housing 6a) via the inner pad 43, the shoe plate 44, the wedge plate 37, the rollers 36, the adjustment case 34, the base plate 35, and the adjustment units 30 to press the caliper 7 toward the inner side.

When the caliper 7 is pressed toward the inner side to be slid, the shoe plate 42 and the outer pad 41 are integrally pressed toward the inner side by the outer housing 6b. Consequently, the outer pad 41 is pressed against the braking surface 4a on the outer side to apply a braking force to the braking surface 4a. Each of the outer pad 41 and the inner pad 43 is thus pressed against the braking surface 4a to apply a braking force to the rotor 4.

The disk brake device 1 is configured such that, by the braking unit 11, the pressing force pressing the inner pad 43 against the braking surface 4a is automatically amplified (self-boosting is effected). The configuration will be described with reference to FIG. 19. Note that, in the following, the description will be given on the assumption that a friction coefficient between the braking surface 4a and the inner pad 43 is µ.

As shown in FIG. 19, when the inner pad 43 is pressed against the braking surface 4a with the pressing force F, a frictional force of F × µ acts toward the forward side f on the inner pad 43. At this time, the frictional force of F × µ also acts on the wedge plate 37 integrated with the inner pad 43, and acts on the abutment portions between the wedge grooves 37a of the wedge plate 37 and the rollers 36. In the abutment portions, a component of the frictional force of F × µ in the direction orthogonal to the braking surface 4a acts on the wedge plate 37 as a counterforce F' acting in the direction which brings the wedge plate 37 closer to the braking surface 4a. Therefore, the inner pad 43 is pressed against the braking surface 4a with a pressing force obtained by adding the counterforce F' to the original pressing force F so that a frictional force (F + F') × µ corresponding to the pressing force (F + F') acts on the inner pad 43.

When the frictional force acting on the inner pad 43 is amplified from F × µ to (F + F') × µ, the inner pad 43, the shoe plate 44, and the wedge plate 37 are resultantly integrally moved to slide toward the forward side f. When such components are moved to slide toward the forward side, the wedge plate 37 receives a larger counterforce from each of the rollers 36 so that the inner pad 43 is thereby pressed against the braking surface 4a with a larger pressing force. The disk brake device 1 is configured to achieve a wedge effect in which the operation in which the inner pad 43 is thus moved to slide in the forward side f by the frictional force and the operation in which the inner pad 43 is thus pressed against the braking surface 4a with a larger pressing force are repeated to cause the pressing force of the inner pad 43 to be automatically amplified.

Subsequently, the flow advances to Step S60 where it is determined in the controller 91 whether or not the pressing force of the inner pad 43 detected in the pressing force sensor 31 when the braking force acts with the outer pad 41 and the inner pad 43 pressed against the braking surfaces 4a is larger than the pressing force corresponding to the braking operation force detected in the stepping force sensor 92a.

In Step S60, when it is determined that the pressing force detected in the pressing force sensor 31 is larger than the pressing force corresponding to the brake operation force, the flow advances to Step S71. In the embodiment which assumes forward running, in Step S71, a drive signal is output from the controller 91 to the electric motor 110 so as to move the wedge plate 37 toward the rearward side to weaken the pressing force. On the other hand, when it is determined that the pressing force detected in the pressing force sensor 31 is smaller than the pressing force corresponding to the brake operation force, the flow advances to Step S72. In the embodiment, in Step S72, a drive signal is output from the controller 91 to the electric motor 110 so as to move the wedge plate 37 toward the forward side to enhance the pressing force.

By repeatedly performing Steps S60, S71, and S72, the rotational driving of the electric motor 110 is controlled so as to press the inner pad 43 against the braking surface 4a with the pressing force corresponding to the braking operation force applied to the brake pedal 92. Consequently, it is possible to cause the braking force intended by the driver to act on the rotor 4 and decelerate the vehicle.

Thus far, the description has been given of the operation of the disk brake device 1. For the disk brake device 1 to obtain the wedge effect, it is necessary to move the inner pad 43 to slide in the rotating direction when the inner pad 43 is moved in the direction perpendicular to the braking surface 4a. On the other hand, in order to press the inner pad 43 against the braking surface 4a to apply a braking force, it is necessary to restrict movement of the inner pad 43 in the rotating direction so that the inner pad 43 does not rotate together with the rotor 4 with the inner pad 43 pressed against the braking surface 4a.

With the inner pad 43 pressed against the braking surface 4a, a rotating-direction component of the braking force generated between the braking surface 4a and the inner pad 43 is transmitted to the base plate 35 via the wedge plate 37 and the rollers 36. Thus, as shown in FIGS. 2 and 3, the carrier 5 is provided with the pair of inner-side rotating-direction movement restricting portions 16, and the base plate 35 is held therebetween so that the rotating-direction component of the braking force is received by the inner-side rotating-direction movement restricting portions 16. As shown in FIG. 1, the carrier 5 including the inner-side rotating-direction movement restricting portions 16 is secured to the axle shaft 2 via the support plate 3. Therefore, it is possible to receive the rotating-direction component of the braking force with the carrier 5 secured to the axle shaft 2, and to reliably restrict movement of the inner pad 43 (base plate 35) in the rotating direction. In particular, the base plate 35 positioned in the vicinity of the inner pad 43 is held between the inner-side rotating-direction movement restricting portions 16, which can effectively restrict movement of the inner pad 43 in the rotating direction.

On the other hand, a component of the braking force generated between the braking surface 4a and the inner pad 43 in the radial direction of the rotor 4 is received with at least one of the inner pad 43, the shoe plate 44, and the wedge plate 37 abutting against the inner-side radial-direction movement restricting portions 17 of the carrier 5. With both the rotating-direction force and the radial-direction force which act on the inner pad 43 thus reliably received by the carrier 5 secured to the axle shaft 2, the disk brake device 1 can have a robust structure with an increased rigidity. With such a robust structure, a braking force corresponding to a brake operation can be precisely applied to the braking surface 4a, which improves the feel of the brake operation.

In addition, as shown in FIG. 2, slide movement of the wedge plate 37 and the inner pad 43 in the rotating direction is permitted although movement of the base plate 35 in the rotating direction is restricted by the inner-side rotating-direction movement restricting portions 16. Therefore, when the inner pad 43 is moved in the direction perpendicular to the braking surface 4a, the inner pad 43 can be moved to slide in the rotating direction to amplify the braking force using the wedge effect. Note that the outer pad 41 is placed on the outer-side radial-direction movement restricting portions 20 with the outer pad 41 held between the pair of outer-side rotating-direction movement restricting portions 19 provided on the carrier 5 to restrict movement of the outer pad 41.

Thus far, the description has been given of the configuration which permits the inner pad 43 to be pressed against the braking surface 4a while moving the inner pad 43 to slide in the rotating direction, and which can effectively restrict movement of the inner pad 43 in the rotating direction when a braking force is applied.

For the disk brake device 1 which uses the wedge effect to precisely control the pressing force of the inner pad 43, it is important to precisely control slide movement of the inner pad 43 in the rotating direction. Because the inner pad 43 is moved to slide with respect to the base plate 35, it is necessary to restrict movement of the base plate 35, which serves as the reference, in the rotating direction for positioning. On the other hand, because the disk brake device 1 is assembled with the base plate 35 inserted between the pair of inner-side rotating-direction movement restricting portions 16, it is necessary to provide a gap (clearance) for absorbing a processing error.

With the presence of the clearance, when the base plate 35 is disposed between the pair of inner-side rotating-direction movement restricting portions 16, a gap corresponding to the clearance is formed between the base plate 35 and the inner-side rotating-direction movement restricting portions 16. Therefore, when it is attempted to move the wedge plate 37 to slide toward the forward side by driving the cam member 27, first, the base plate 35 is moved to slide toward the rearward side by an amount corresponding to the clearance by the counterforce applied to the cam member 27. At this time, because the counterforce applied to the cam member 27 is not received, the wedge plate 37 is not moved to slide toward the forward side even if the cam member 27 is driven. When the base plate 35 is moved to slide toward the rearward side by the amount corresponding to the clearance to abut against the inner-side rotating-direction movement restricting portions 16, the wedge plate 37 is moved to slide toward the forward side in response to driving of the cam member 27 with the counterforce applied to the cam member 27 received by the inner-side rotating-direction movement restricting portions 16. If the clearance is thus provided, there is generated a delay in driving of the wedge plate 37 (inner pad 43) by an amount corresponding to the slide movement of the base plate 35 caused by the counterforce applied to the cam member 27. Such a delay in driving is generated every time the driving direction of the cam member 27 is changed in order to control the pressing force of the inner pad 43.

Thus, in the disk brake device 1, as shown in FIGS. 2 and 3, the pressing positioning member 80 is inserted into the gap between the rearward-side end portion of the base plate 35 and the inner-side rotating-direction movement restricting portion 16 to be attached vertically after the base plate 35 is disposed between the pair of inner-side rotating-direction movement restricting portions 16. Consequently, the forward-side end portion of the base plate 35 can be elastically pressed against the inner-side rotating-direction movement restricting portion 16 by the spring force of the plate-shaped main body portion 81 constituting the pressing positioning member 80 to hold the base plate 35 as positioned in the rotating direction. Therefore, the counterforce applied to the cam member 27 is received by the plate-shaped main body portion 81 of the pressing positioning member 80 without slide movement of the base plate 35 occurring when the cam member 27 is driven. Hence, the wedge plate 37 can be immediately moved to slide toward the forward side in response to driving of the cam member 27. Thus, the disk brake device 1 is configured to press the inner pad 43 against the braking surface 4a by moving the inner pad 43 to slide as controlled while providing a clearance for absorbing a processing error and preventing a delay in driving of the wedge plate 37 generated by the presence of such a clearance. Note that the clearance is set to such a value that allows insertion of the plate-shaped main body portion 81 in a compressed state.

The spring force of the plate-shaped main body portion 81 constituting the pressing positioning member 80 will be described with reference to FIG. 7. When the pads 41 and 43 are pressed against the braking surfaces 4a to apply a braking force, the cam member 27 is driven using the rotational driving force of the electric motor 110, and a driving force F₁' which resists against the spring force of the compression spring 39c which draws the wedge plate 37 toward the inner side and the braking force is applied to the wedge plate 37 to move the wedge plate 37 to slide toward the forward side. When the wedge plate 37 is moved by the driving force F₁' to slide toward the forward side, a counterforce F₁ toward the rearward side is applied to the cam member 27. The pressing positioning member 80 is configured such that a spring force F₂ which is necessary to deform the plate-shaped main body portion 81 is larger than the counterforce F₁. Therefore, the forward-side end portion of the base plate 35 is elastically pressed against the inner-side rotating-direction movement restricting portion 16 such that no gap is formed between the pair of inner-side rotating-direction movement restricting portions 16 and the base plate 35 to maintain the base plate 35 as positioned in the rotating direction.

hen the inner pad 43 is abraded, it is necessary to bring the inner pad 43 and the base plate 35 closer to the braking surface 4a for adjustment in order to keep the gap between the inner pad 43 and the braking surface 4a at a predetermined distance. In the case where the inner pad 43 and the base plate 35 are brought closer to the braking surface 4a for adjustment, as shown in FIG. 7, a force of F₂ × µ₂ (friction coefficient between the pressing positioning member 80 and the inner-side rotating-direction movement restricting portion 16) is applied toward the inner side as the resisting force against an adjustment force F₃. The plate-shaped main body portion 81 has such a spring force F₂ that meets the relationship F₃ > F₂ × µ₂. Therefore, the adjustment unit 30 can bring the inner pad 43 closer to the braking surface 4a for adjustment with the base plate 35 kept positioned in the rotating direction.

When the pressing positioning member 80 is inserted into the gap between the base plate 35 and the inner-side rotating-direction movement restricting portion 16, the pressing positioning member 80 is attached to the base plate 35 with the engagement portions 83 engaged with the rearward-side end portion of the base plate 35. Therefore, it is possible to prevent the pressing positioning member 80 from slipping off from the gap between the base plate 35 and the inner-side rotating-direction movement restricting portion 16.

In the disk brake device 1 according to the embodiment, the pressing positioning member 80 is provided at a position at which the pressing positioning member 80 receives the counterforce F₁ applied toward the rearward side, that is, inserted into the gap between the rearward-side end portion of the base plate 35 and the inner-side rotating-direction movement restricting portion 16. Therefore, there is a possibility that a gap is formed between the pair of inner-side rotating-direction movement restricting portions 16 and the base plate 35 with the plate-shaped main body portion 81 deformed by a braking force during rearward running. However, with a priority given to forward running, which is generally more frequent than rearward running, it is possible to prevent a delay in driving of the wedge plate 37 during forward running.

Thus far, the description has been given of the configuration which permits movement of the base plate 35 in the direction which brings the base plate 35 closer to the braking surface 4a while restricting movement of the base plate 35 in the rotating direction.

In order to efficiently transmit the rotational driving force of the electric motor 110 to the cam member 27, it is preferable that the electric motor 110 is configured to be disposed on the axis of the cam drive shaft 170. With this configuration, however, components of the vehicle mounted with the disk brake device 1 and the electric motor 110 may interfere with each other to restrain the arrangement space for the electric motor 110. In particular, the arrangement space for the electric motor 110 is more easily restrained as the electric motor 110 increases in size.

Thus, in the disk brake device 1, the electric motor 110 is not disposed on the axis of the cam drive shaft 170, but attached to the outer circumferential portion of the caliper 7 (inner housing 6a) such that the motor output shaft 112 is positioned on the outer circumferential side with respect to the cam drive shaft 170. With the electric motor 110 thus attached to the outer circumferential portion of the caliper 7, it is possible to increase the degree of freedom of the arrangement of the electric motor 110 while avoiding interference between components of the vehicle mounted with the disk brake device 1 and the electric motor 110.

If the electric motor 110 is attached to the outer circumferential portion of the caliper 7, a mechanism which transmits the rotational driving force of the motor output shaft 112 to the cam drive shaft 170 is necessary. The caliper 7 to which the electric motor 110 is attached is attached to the carrier 5 via the slide pin 8, and has a clearance which permits slide movement. On the other hand, the cam drive shaft 170 is positioned on the carrier 5 via the base plate 35. Therefore, there may be a case where the axis of the motor output shaft 112 (output shaft of the speed reducer 120) and the axis of the cam drive shaft 170 are tilted.

Therefore, as shown in FIG. 15B, the output-side involute serrated shaft portion 132 and the input-side involute serrated shaft portion 133 constituting the driving force transmission shaft 130 are preferably configured to have an arcuate cross section. Consequently, the driving force transmission shaft 130 can smoothly transmit a rotational driving force with the shafts and the shaft receiving portions kept engaged with each other while permitting tilt between the axis of the motor output shaft 112 (output shaft of the speed reducer 120) and the axis of the cam drive shaft 170. The gear unit 140 is configured to minimize backlash between the engaging teeth 152 of the input-side spur gear 150 and the engaging teeth 162 of the output-side spur gear 160. Thus, the rotational driving force of the electric motor 110 can be transmitted responsively and efficiently.

When the inner pad 43 is adjusted by the adjustment unit 30, the cam member 27 and the cam drive shaft 170 are integrally pushed out toward the outer side. On the other hand, the gear unit 140 which transmits a rotational driving force to the cam drive shaft 170 abuts against the inner housing 6a so that movement of the gear unit 140 in the axial direction of the rotor 4 is restricted. Thus, the input-side involute spline shaft portion 173 of the cam drive shaft 170 and the involute spline shaft receiving portion of the output-side spur gear 160 are engaged with each other so as to transmit a rotational driving force while permitting movement relative to each other in the axial direction of the rotor 4. Therefore, even if the cam drive shaft 170 is moved toward the outer side relative to the gear unit 140 in response to the adjustment, the input-side involute spline shaft portion 173 and the involute spline shaft receiving portion of the output-side spur gear 160 are kept engaged with each other. Hence, the rotational driving force of the electric motor 110 can be transmitted to the cam drive shaft 170 via the gear unit 140 while permitting adjustment. Note that the input-side involute spline shaft portion 173 is formed to extend in the axial direction in correspondence with the adjustment.

In the embodiment described above, the description has been given of the example of the configuration in which the pressing force of the inner pad 43 is detected using the pressing force sensor 31 and fed back to control the rotational driving of the electric motor 110. However, the application of the present invention is not limited to the example of the configuration. For example, the configuration may also be such that, instead of detecting the pressing force of the inner pad 43, a brake torque generated by pressing the inner pad 43 against the braking surface 4a is detected or the deceleration of the vehicle is detected to control the rotational driving of the electric motor 110.

In the embodiment described above, the description has been given of the example of the configuration in which the adjusting drive gear 38 is automatically driven to rotate in accordance with the gap between the inner pad 43 and the braking surface 4a to perform a gap adjustment. However, the present invention is not limited to the example of the configuration. Instead of the configuration, the configuration may also be such that an adjusting electric motor which drives the adjusting drive gear 38 to rotate is provided separately and the rotational diving of the adjusting electric motor is controlled to perform the gap adjustment.

### EXPLANATION OF NUMERALS AND CHARACTERS

1 Disk Brake Device
2 Axle Shaft (Support Member)
4 Rotor
4a Braking Surface
5 Carrier
7 Caliper
16 Inner-side Rotating-direction Movement Restricting Portion (Rotating-direction Movement Restricting Portion)
27 Cam Member (Slide Member Movement Mechanism)
35 Base Plate (Base Member)
36 Roller (Slide Member Movement Mechanism)
37 Wedge Plate (Slide Member)
43 Inner Pad (Friction pad)
80 Pressing Positioning Member (Pressing Member)
81 Plate-shaped Main Body Portion (Elastically Deformable Portion)
83 Engagement Portion
100 Cam Drive Unit (Slide Member Movement Mechanism)

## Claims

1. A disk brake device comprising:
a rotor having a disk-shaped braking surface and coupled to a rotating body to be braked to rotate;
a carrier attached to a support member which rotatably supports the rotating body and disposed to face the braking surface of the rotor;
a caliper attached to the carrier to be movable in a direction perpendicular to the braking surface;
a friction pad disposed to face the braking surface of the rotor; and
a braking operation mechanism attached to the caliper to be caused to perform an operation of pressing the friction pad against the braking surface,
the braking operation mechanism including a base member held by the caliper, a slide member disposed to face the base member and holding the friction pad, and a slide member movement mechanism provided between the base member and the slide member to move the slide member in the direction perpendicular to the braking surface while moving the slide member to slide relative to the base member in a rotating direction of the rotor in parallel to the braking surface,
the slide member and the friction pad held thereby being moved by the slide member movement mechanism in the rotating direction of the rotor and the direction perpendicular to the braking surface so that the friction pad is pressed against the braking surface to brake rotation of the rotor,
the carrier including a pair of rotating-direction movement restricting portions which hold the base member therebetween at both ends in the rotating direction of the rotor and hold the base member with movement thereof in the rotating direction restricted,
the disk brake device further comprising a pressing member inserted into one of gaps between the pair of rotating-direction movement restricting portions and both ends of the base member so as to be attached to the base member, and
the pressing member being configured to press the base member in a direction away from the rotating-direction movement restricting portion in the one of the gaps, cause an end portion of the base member to abut against the rotating-direction movement restricting portion forming the other of the gaps, and position the base member relative to the carrier in the rotating direction, thereby permitting the base member to move in the direction perpendicular to the braking surface with the base member kept positioned in the rotating direction.

2. The disk brake device according to claim 1, wherein:
the pressing member includes an elastically deformable portion formed to be elastically deformable; and
the elastically deformable portion is elastically deformed when inserted into one of the gaps, thereby pressing the base member in the direction away from the rotating-direction movement restricting portion.

3. The disk brake device according to claim 1 or 2, wherein
the pressing member includes an engagement portion which is engaged with the base member when inserted into one of the gaps.
